# EUROPEAN PATENT APPLICATION

(11) **EP 3 072 661 A1**
(43) Date of publication of application: **28.09.2016**
(21) Application number: 15743525.6
(22) Date of filing: 27.01.2015
(51) Int. Cl.: B29C 43/34, B29C 43/12, B29C 43/18, B29C 70/06, B29K 105/08

(54) **FRP-MOLDING JIG AND METHOD FOR MOLDING FRP STRUCTURE**

(30) Priority: 31.01.2014 JP 2014016998
(71) Applicant: Mitsubishi Heavy Industries, Ltd., Tokyo 108-8215 (JP)
(72) Inventor: ABE, Toshio, Tokyo 108-8215 (JP); KATO, Tetsuya, Tokyo 108-8215 (JP); TAKAGI, Kiyoka, Tokyo 108-8215 (JP); KOYAMA, Takayuki, Tokyo 108-8215 (JP); YOSHINO, Katsuya, Tokyo 108-8215 (JP); KISHIMOTO, Kazuaki, Tokyo 108-8215 (JP); SAITO, Koichi, Nagoya-shi Aichi 453-0862 (JP); ISHIDA, Takashi, Nagoya-shi Aichi 453-0862 (JP)
(74) Representative: Henkel, Breuer & Partner
(86) International application number: PCT/JP2015/052213
(87) International publication number: WO 2015/115433

(57) **Abstract**

A FRP-molding jig has a main structure material-holding jig (22) and a flexible reinforcing component-holding jig (26A, 26D). The FRP-molding jig is used when the main structure material (12) and the reinforcing component (14A, 14B) are joined to mold the FRP structure (10). The main structure material-holding jig (22) position and holds the main structure material (12) composed of a fiber component. The reinforcing component-holding jig (26A, 26D) is positioned in relation to the main structure material-holding jig (22), and performs positioning and holding while pressing the reinforcing component (14A, 14B) composed of a fiber component,

## Description

### Technique Field

The present invention relates to an FRP (fiber reinforced plastics) shaping jig used to shape an FRP structure and a method of shaping the FRP structure.

### Background Art

In recent years, the application fields of an FRP structure to industrial products are expanding. As a merit of the FRP structure, the reduction of the number of parts and the number of assembling steps can be accomplished through an integrally shaping technique.

In the integration of a plurality of parts, the shaping is carried out in which main structure members such as an outer skin and reinforcement parts such as a stringer are joined. In this case, the positioning precision between the main structure member and the reinforcement parts becomes important. Also, a method of pressing the main structure member and the reinforcement part and a method of arranging jigs are important in the joining.

A method of shaping an FRP structure by combining and joining a main structure member and a reinforcement part is disclosed in FIG. 11 and FIG. 22 of US Patent Publication (US 2011/0315824A (Patent Literature 1)). In the method of shaping the FRP structure disclosed in Patent Literature 1, a ditch is formed in an FRP structure shaping jig beforehand so as to position a stiffener preform (reinforcement part), the stiffener preform (reinforcement part) is arranged in the ditch, and then reinforcement fiber (a base material of the main structure member) is arranged to cover the stiffener preform. Then, a release material and a sheet for diffusion of a matrix resin are arranged and the FRP structure to be shaped is covered with a vacuum bag. Then, the inner space of the vacuum bag is evacuated, and a matrix resin is injected. After that, heating and so on is carried out to cure the matrix resin.

Also, as a related technique, the use of a male-type jig when a reinforcement member is applied to a composite material structure that is the fuselage of an aircraft is disclosed in Patent Literature 2. Also, the use of a jig composed of a supporting body and a plurality of panels when a reinforcement member or a stringer is applied to the composite material structure that is the fuselage of an aircraft is described in Patent Literature 3.

In the method of shaping the FRP structure described in Patent Literature 1, the reinforcement part is arranged directly in the ditch formed in the jig to position to the main structure. When using this positioning method, it is required to determine a ditch width of the jig in consideration of a shape tolerance of the reinforcement part. There is a problem that the positioning precision of the reinforcement part to the main structure becomes degraded due to the influence of this shape tolerance. Especially, when using a co-bonding technique, there is a problem that it is difficult to position a cured part to an un-cured part in a high precision.

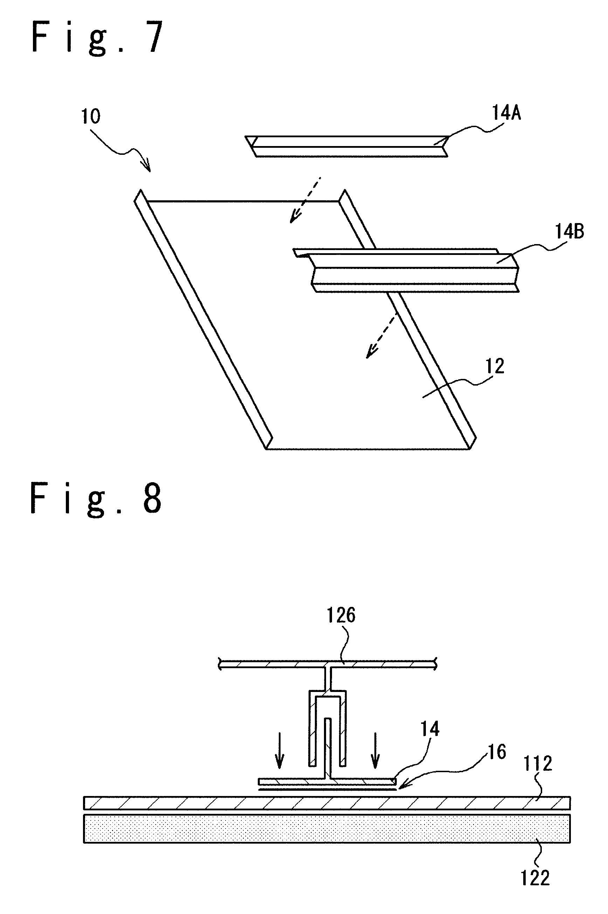

FIG. 8 shows a conventional method of positioning a reinforcement part 14 to a main structure 112. The FRP structure has the main structure 112, the reinforcement part 14, and a joining section 16 that joins the main structure 112 and the reinforcement part 14.

For example, the main structure 112 is a prepreg member for the outer skin of an aircraft and so on. For example, the reinforcement part 14 is a prepreg member that is a stringer and a prepreg material having a T-shaped section.

Referring to FIG. 8, the method of shaping the FRP structure will be described. When shaping the FRP structure, the main structure 112 is first arranged on the main structure jig 122 having a predetermined shape.

Next, an adhesive film and so on as the joining section 16 is arranged, and a vertical extending section of the reinforcement part 14 is inserted into a U-shaped ditch of a positioning jig 126 to position the reinforcement part 14 to the main structure 112. Then, the joining section 16 is cured in the condition that a force pressing the reinforcement part 14 to the main structure 112 is applied. In this way, the FRP structure is completed.

However, because the reinforcement part 14 has a shape tolerance and a size tolerance, it is necessary to previously form a gap between the reinforcement part 14 and an engagement section of the positioning jig 126. There is a problem that the positioning precision of the reinforcement part 14 to the main structure 112 drops, due to the existence of this gap.

Also, in an FRP structure in which a closed space exists between the main structure and the reinforcement part, or when structure parts interfere with each other in the integration, there is a problem that the bagging to press the reinforcement part to the main structure becomes difficult.

### Citation List

[Patent Literature 1] US 2011/0315824A1
[Patent Literature 2] EP Patent 2128017
[Patent Literature 3] US Patent 7,597,772

### Summary of the Invention

A subject matter of the present invention is to provide an FRP shaping jig and a method of shaping an FRP structure, in which it is possible to integrate and shape a main structure and a reinforcement part in a high precision.

The FRP shaping jig of the present invention is used when a main structure and a reinforcement part are joined to shape an FRP structure. The FRP shaping jig has a main structure holding jig and a reinforcement part holding jig with flexibility. The main structure holding jig positions and holds the main structure formed from a fiber component. The reinforcement part holding jig is positioned to the main structure holding jig and positions and holds the reinforcement part formed from a fiber component while pushing the reinforcement part.

In the method of shaping the FRP structure of the present invention, a main structure and a reinforcement part are joined to shape an FRP structure, by using an FRP shaping jig. The FRP shaping jig has a main structure holding jig and a reinforcement part holding jig with flexibility. The main structure holding jig positions and holds the main structure formed from a fiber component. The reinforcement part holding jig is positioned to the main structure holding jig, and positions and holds the reinforcement part formed from a fiber component while pushing the reinforcement part. The method of shaping an FRP structure includes arranging the reinforcement part holding jig in the main structure holding jig; supporting the reinforcement part by using the reinforcement part holding jig; arranging the main structure on the reinforcement part of the main structure holding jig; joining the main structure and the reinforcement part to shape an FRP structure; and removing the FRP structure from the main structure holding jig and the reinforcement part holding jig.

By using a method of shaping an FRP structure and an FRP shaping jig according to the present invention, the main structure and the reinforcement part can be integrated in a high precision.

### Brief Description of the Drawings

The attached drawings are incorporated into the Specification to assist the understanding of embodiments. Note that the drawings should not be used to restrict the present invention to the embodiments and illustrated examples.
[FIG. 1] FIG. 1 is a perspective view of an outward appearance of an FRP structure shaped by using an FRP shaping jig according to an embodiment.
[FIG. 2] FIG. 2 is a diagram showing a state when the FRP structure is shaped by using the FRP shaping jig and is a sectional view in an X-Y plane of FIG. 1.
[FIG. 3] FIG. 3 is a diagram showing another embodiment of a reinforcement part holding jig of the FRP shaping jig.
[FIG. 4] FIG. 4 is a diagram showing another embodiment of the FRP shaping jig.
[FIG. 5] FIG. 5 is a perspective diagram showing the structure of a core of a separate type.
[FIG. 6] FIG. 6 is a perspective view of an outward appearance of the FRP structure showing a condition that the reinforcement part is joined to the main structure.
[FIG. 7] FIG. 7 is a perspective view showing a condition that the reinforcement part is joined to the main structure.
[FIG. 8] FIG. 8 is a sectional view showing a conventional method of positioning a main structure and a reinforcement part.

### Description of the Embodiments

Referring to the attached drawings, the embodiments of an FRP shaping jig and a method of shaping an FRP structure will be described below. In the following description, many detailed specific items are disclosed for the purpose of the description to provide the comprehensive understanding of the embodiments. However, it would be apparent that one or plural embodiments can be carried out without these detailed specific items.

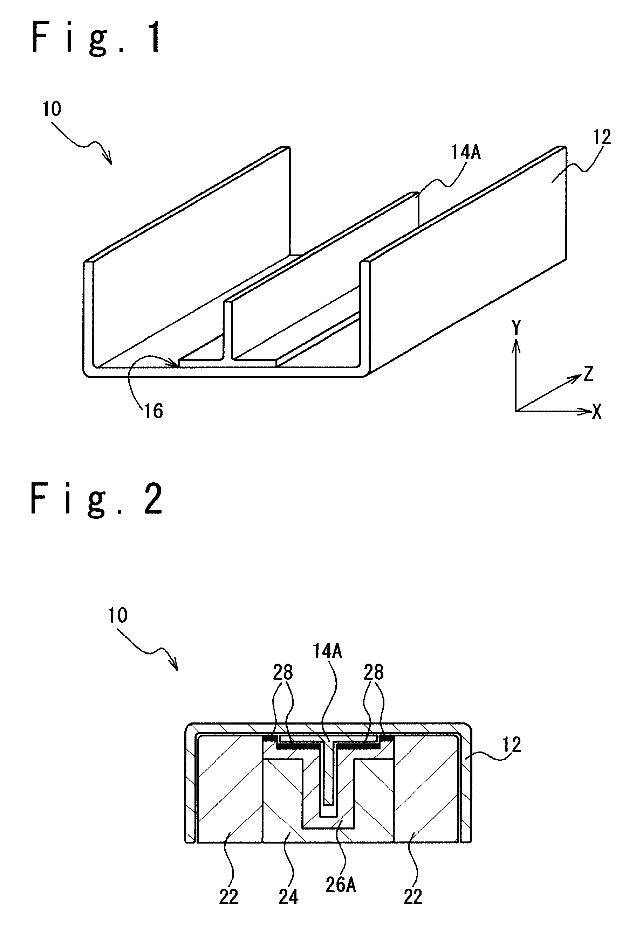

FIG. 1 is a perspective view of an outward appearance of the FRP structure 10 shaped by using the FRP shaping jig according to one embodiment. FIG. 2 is a diagram showing the condition that the FRP structure 10 is shaped by using the FRP shaping jig, and especially, is a sectional view in the X-Y plane of FIG. 1.

Referring to FIG. 1, the FRP structure 10 has a main structure 12, a reinforcement part 14A and a joining section 16 which joins the main structure 12 and the reinforcement part 14A. The FRP structure 10 shown in FIG. 1 has a structure in which the reinforcement part 14A is positioned and joined to the main structure 12.

The main structure 12 (a fiber component) is, for example, a wide FRP channel having a C-shaped type sectional shape. For example, the reinforcement part 14A (a fiber component) is an FRP member having a T-shaped type sectional shape. In the FRP structure 10 shown in FIG. 1, one line of the reinforcement part 14A is arranged to the main structure 12, but more than one lines of the reinforcement parts 14A may be arranged to the main structure 12. Also, the main structure 12 may be of a small size or a large size. Note that the shape of the main structure 12 is not limited to the C-shaped sectional shape and may be a flat shape, a curved surface shape, or another shape.

The joining section 16 is a part where the main structure 12 and the reinforcement part 14A are joined, and an adhesive film, an adhesive material, a matrix resin and so on are used for the joining section 16.

Referring to FIG. 2, a method of positioning the reinforcement part 14A will be described when the reinforcement part 14A is joined to the main structure 12 to shape the FRP structure 10. Supposing that the reinforcement part 14A is a FRP prepreg material having a T-shaped type sectional shape, one embodiment will be described in which the reinforcement part 14A is positioned to an un-cured fiber-reinforcing base material (the main structure 12), and a matrix resin is injected thereinto and cured.

The FRP shaping jig shown in FIG. 2 includes two pieces of main structure holding jig 22, a slide core 24, a flexible reinforcement part holding jig 26A and a hard section 28.

The two pieces of main structure holding jig 22 function as a shaping die for shaping an un-cured fiber reinforcing base material (the main structure 12) and hold the reinforcement part holding jig 26A. The main structure holding jig 22 positions and holds the main structure 12. In other words, the main structure holding jig 22 is positioned to the main structure 12. The main structure holding jig 22 contacts the main structure 12 and positions and holds the main structure 12. In an example shown in FIG. 2, the main structure holding jig 22 contacts a undersurface of an upper wall as a wall surface of the main structure 12 and an inner surface of a side wall as a wall surface of the main structure 12.

The main structure holding jig 22 positions the reinforcement part holding jig 26A. In an example shown in FIG. 2, the main structure holding jig 22 contacts the reinforcement part holding jig 26A (more specifically, the main structure holding jig 22 contacts a first side surface and second side surface of the reinforcement part holding jig 26A). The main structure holding jig 22 puts the reinforcement part holding jig 26A between the two pieces.

The main structure holding jig 22 positions the slide core 24. In an example shown in FIG. 2, the main structure holding jig 22 contacts the slide core 24 (more specifically, the two piece of main structure holding jig 22 contact a first and second side surfaces of the slide core). The two pieces of main structure holding jig 22 support the slide core 24 therebetween. The slide core 24 may be configured to hold the reinforcement part holding jig 26A. In the example shown in FIG. 2, the slide core 24 has a concave section. A part of the reinforcement part holding jig 26A (for example, a holding jig extending section which elastically holds a reinforcement part extending section to be described later) is arranged in a concave section of the slide core 24. The part of the reinforcement part holding jig 26A is held by the concave section of the slide core 24.

Note that the slide core can be omitted by integrating the main structure holding jig 22 and the slide core 24.

When the main structure holding jig 22 and the slide core 24 are separate bodies, it becomes easy to detach the main structure holding jig 22 from the main structure 12. This is because it is possible to separate the slide core 24 from the main structure holding jig 22 by sliding the slide core 24 from the main structure holding jig 22 (to a lower direction in FIG. 2). After the slide core 24 is detached from the main structure holding jig 22, the main structure holding jig 22 and the reinforcement part holding jig 26A can be detached from the FRP structure 10.

The reinforcement part holding jig 26A engages with the main structure holding jig 22 and the slide core 24 and carry out the positioning of the reinforcement part 14A in the X axial direction (reference to FIG. 1). The reinforcement part holding jig 26A positions the reinforcement part 14A while pushing an extending section of the reinforcement part 14A from a lateral direction. In the example shown in FIG. 2, the reinforcement part 14A includes a base section having a contact surface that contacts the surface of the main structure 12, and an extending section which extends from the base section (for example, a part extending in a direction orthogonal to the contact surface of the base section). In the example shown in FIG. 2, the reinforcement part holding jig 26A positions the reinforcement part 14A at the center by pushing a vertically extending section in the T-shaped type sectional shape of the reinforcement part 14A from both sides (supporting between the both sides). In the example shown in FIG. 2, the reinforcement part holding jig 26A has a concave section that can accept the extending section of the reinforcement part 14A. The extending section arranged in the concave section is supported by the reinforcement part holding jig 26A through elasticity of the reinforcement part holding jig 26A. That is, the extending section is supported between two parts of the reinforcement part holding jig 26A by a first side surface of the concave section contacting a first side surface of the extending section and a second side surface of the concave section contacting a second side surface of the extending section.

The reinforcement part holding jig 26A includes a holding jig base section that contacts the base section of the reinforcement part 14A. Also, the reinforcement part holding jig 26A includes an extending section of the holding jig extending from the holding jig base section. The holding jig extending section has the concave section that can accept the extending section of the reinforcement part 14A.

There is a tolerance range in each of the shape and size of the reinforcement part 14A. Therefore, the vertically extending section orthogonal in the T-shaped type sectional shape has different values in the width and length for every reinforcement part 14A. Conventionally, because a hard positioning jig has been used, the width of the ditch of the positioning jig has been set widely, such that the extending section of the reinforcement part 14A can be located in a U-shaped ditch of the hard positioning jig, even when the width of the extending section of the reinforcement part 14A has a maximum value of the tolerance range. Therefore, because a gap is always formed between the extending section of the reinforcement part 14A and the ditch of the positioning jig, the positioning precision of the reinforcement part 14A in the direction of X (reference to FIG. 1) has been degraded by the gap.

Because the reinforcement part holding jig 26A shown in FIG. 2 supports the vertically extending section of the reinforcement part 14A from both sides, the reinforcement part 14A can be positioned at the center. As a material of the reinforcement part holding jig 26A, various types of rubber such as a foaming rubber can be used. When considering a chemical resistance, it is desirable to use a silicon-base rubber material.

Also, it is desirable that a hard section 28 having flexibility is arranged at a position where the reinforcement part 14A is pushed toward the main structure 12 by using the reinforcement part holding jig 26A and at a position where the reinforcement part holding jig 26A pushes the main structure 12 directly. The hard section 28 is harder than a part of the reinforcement part holding jig 26A other than the hard section 28. Because the reinforcement part holding jig 26A has the flexibility, there is a possibility that a welter (i.e. a non-linear section) is generated in the reinforcement part 14A and the main structure 12 when shaping the FRP structure 10. As a result, there is a possibility that a shape error is generated in the reinforcement part 14A or the main structure 12.

The flatness and straightness of the reinforcement part 14A or the main structure 12 of the FRP structure 10 at a predetermined position (in the neighborhood of the joining section 16) can be improved, by arranging the hard section 28 having the flexibility at the position where the reinforcement part 14A is pushed toward the main structure 12 by using the reinforcement part holding jig 26A and at the position where the reinforcement part holding jig 26A directly pushes the main structure 12.

Note that the fitness of the reinforcement part 14A and the main structure 12 can be improved and defects such as a void can be reduced, by providing flexibility to the hard section 28 when the reinforcement part 14A and the main structure 12 are joined. It is desirable that the hard section 28 having the flexibility has a heat resistance property to a temperature higher than the curing temperature of a matrix resin or an adhesive material. Also, it is desirable that the hard section 28 has a stiffness to an extent that the flatness and straightness of a joining section or shaping section can be provided, and especially, it is desirable that the hard section 28 has the stiffness so that a surface precision required to the product in the shaping can be provided in the pushing. Also, it is desirable that it is difficult for residues to be left. For example, a light-weight composite material such as GFRP (a plate member of about 0.1 to 5 mm in thick) or a metal foil (a plate member of about 0.1 to 1 mm in thick) can be used, in which it is difficult for residues to be left. Alternatively, the hard section 28 may have a configuration in which these plate members are arranged on a pushing section surface and the materials of these plate members are combined with other materials.

In the embodiment shown in FIG. 2, a split type structure is used that includes two pieces of the main structure holding jig 22 and the slide core 24. Therefore, the main structure holding jig 22 and the slide core 24 of a split type structure are first assembled, when the FRP structure 10 should be shaped.

Next, the reinforcement part holding jig 26A is arranged to the main structure holding jig 22 and the slide core 24. Then, the vertical extending section of the reinforcement part 14A is inserted into the ditch of the reinforcement part holding jig 26A to bring the lower side of the horizontal section of the T-shaped section into contact with the hard section 28.

Next, an un-cured fiber reinforcing base material (the main structure 12) is arranged on the main structure holding jig 22, the reinforcement part holding jig 26A and the reinforcement part 14A to cover them. Then, a release agent and resin diffusion media are arranged on the outer surface of the un-cured fiber reinforcing base material (the main structure 12). The main structure 12, the reinforcement part 14A, the main structure holding jig 22 and the reinforcement part holding jig 26A is covered with a suction bag (a bagging film). The inside of the suction bag is evacuated and a pushing pressure is applied to the joining section 16 by using the atmosphere pressure. At the same time, a matrix resin is injected into the fiber reinforcing base material in which the resin is not impregnated.

When the matrix resin of a thermal cure type is used, the inside of the bag is evacuated, the matrix resin is injected and then heating is carried out to cure the matrix resin. When the matrix resin is cured to join the main structure 12 and the reinforcement part 14A, the suction bag is removed and the FRP structure 10 and the FRP shaping jig are removed.

Next, after the slide core 24, the reinforcement part holding jig 26A and the hard section 28 are pulled out (in the lower direction of FIG. 2), the two pieces of main structure holding jig 22 are moved to the central direction (more specifically, the lower-side portions of the two pieces of main structure holding jig 22 are moved to the direction of the extending section of the reinforcement part 14A) to separate the two pieces of main structure holding jig 22 from the FRP structure 10. Thus, the FRP structure 10 shown in FIG. 1 is obtained.

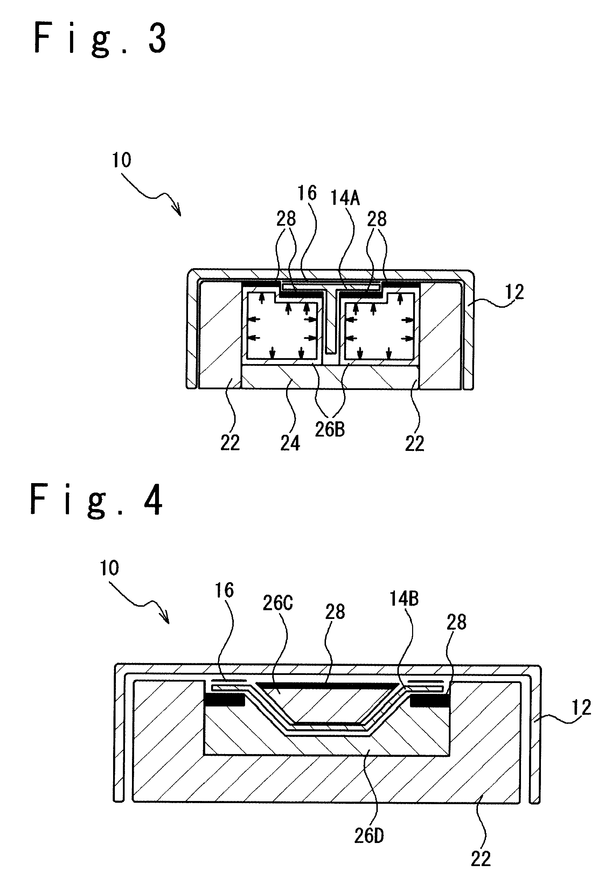

Next, referring to FIG. 3, another embodiment of the reinforcement part holding jig will be described. In FIG. 2, the embodiment has been described in which the reinforcement part 14A is supported, positioned and held by the two surfaces of the reinforcement part holding jig 26A of a solid structure. On the other hand, in the embodiment shown in FIG. 3, the reinforcement part 14A is supported, positioned and held by two pieces of reinforcement part holding jig 26B of a hollow structure. Note that the same reference numerals are assigned to parts having the same operations as the parts in the embodiment shown in FIG. 1 and FIG. 2, and the description is omitted.

The two pieces of reinforcement part holding jig 26B shown in FIG. 3 have the hollow structure and the reinforcement part 14A is positioned and held while being pushed with an internal pressure in the hollow section. By using the two pieces of reinforcement part holding jig 26B, the improvement of positioning precision can be achieved.

Next, referring to FIG. 4, another embodiment of the FRP shaping jig will be described. In FIG. 2 and FIG. 3, the embodiments have been described in which the reinforcement part 14A having the T-shaped type sectional shape is positioned and held on the surface section of the main structure 12 for the shaping. On the other hand, in the embodiment of FIG. 4, a method of shaping an FRP structure is described in which a closed space is formed between the reinforcement part 14B and the main structure 12. Note that the same reference numerals are assigned to the parts having the same operations as the parts of the embodiment shown in FIG. 2, and the description is omitted.

Referring to FIG. 4, the main structure 12 (the fiber component) is the wide-channel FRP structure having the C-shaped type sectional shape. For example, the reinforcement part 14B (a fiber component) is an FRP structure member having a trapezoidal sectional shape. The main structure 12 and the reinforcement part 14B are joined at two separate joining sections 16. Therefore, the FRP structure 10 shown in FIG. 4 has the closed space of a trapezoidal sectional shape between the reinforcement part 14B and the main structure 12.

Referring to FIG. 4, a method of positioning the reinforcement part 14B when the reinforcement part 14B is joined to the main structure 12 to form the FRP structure 10 will be described. In this case, the embodiment will be described, in which the reinforcement part 14B is an FRP prepreg member and is positioned to the un-cured fiber reinforcing base material (the main structure 12) by using the FRP shaping jig, and the matrix resin is injected and cured.

The FRP shaping jig shown in FIG. 4 includes the main structure holding jig 22, a reinforcement part holding jig 26D having flexibility, and a core 26C having flexibility and the hard section 28.

The main structure holding jig 22 functions as a die for shaping the un-cured fiber reinforcing base material (the main structure 12) and holds the reinforcement part holding jig 26D. In the embodiment shown in FIG. 4, the main structure holding jig 22 contacts the reinforcement part holding jig 26D. The main structure holding jig 22 holds the reinforcement part holding jig 26D therein. More specifically, the reinforcement part holding jig 26D is supported by a first inside surface of the main structure holding jig 22 and a second inside surface of the main structure holding jig 22. In the embodiment shown in FIG. 4, the main structure holding jig 22 has a concave section. The reinforcement part holding jig 26D is arranged in the concave section of the main structure holding jig 22.

The reinforcement part holding jig 26D engages with the main structure holding jig 22 and positions and holds the reinforcement part 14B while pushing a convex striated section of the reinforcement part 14B (an extending striated section) in a left and right direction and an upward direction, in order to position the reinforcement part 14B in a lateral direction (in a left and right direction on FIG. 4) and an upper and lower direction (an upper and lower direction on FIG. 4). In the embodiment shown in FIG. 4, the reinforcement part 14B includes a base section having a contact surface which contacts the surface of the main structure 12, and the extending striated section as a portion extending from the base section (for example, the portion extending in an orthogonal direction to the contact surface of the base section). The extending striated section is a portion having the trapezoidal sectional shape. In the embodiment shown in FIG. 4, the reinforcement part holding jig 26D pushes the extending striated section of the reinforcement part 14B from both sides thereof (supporting the extending striated section therebetween) to position and hold the reinforcement part 14B at the center. In the embodiment shown in FIG. 4, the reinforcement part holding jig 26D has the concave section to be able to receive the extending striated section of the reinforcement part 14B. The extending striated section is arranged in the concave section to be supported by the reinforcement part holding jig 26D with the elasticity of the reinforcement part holding jig 26D. That is, a first side surface of the concave section (an inclined side surface) contacts a first side surface of the extending striated section, and a second side surface of the concave section (an inclined side surface) contacts a second side surface of the extending striated section. Thus, the extending striated section is supported between the reinforcement part holding jig 26D. In the embodiment shown in FIG. 4, the reinforcement part holding jig 26D supports the extending striated section of the reinforcement part 14B from both the sides to position and hold the reinforcement part 14B at the center. There is a given tolerance in the shape and size of the reinforcement part 14B. However, in the embodiment shown in FIG. 4, because the reinforcement part holding jig 26D having flexibility pushes the extending striated section of the reinforcement part 14B to both the sides, the reinforcement part 14B can be positioned and held at the center.

The reinforcement part holding jig 26D includes a holding jig base section contacting the base section of the reinforcement part 14B. Also, the reinforcement part holding jig 26D includes a reinforcement part accepting section extending from the holding jig base section. The reinforcement part accepting section has a concave section that can accept the extending striated section of the reinforcement part 14B.

Also, in the reinforcement part holding jig 26D, a hard section 28 having flexibility is arranged in a portion that pushes the reinforcement part 14B for the main structure 12 (under the joining section 16), so that the flatness and straightness of the joining section of the main structure 12 and the reinforcement part 14B in the FRP structure 10 can be improved. The hard section 28 has a hardness which is higher than a portion of the reinforcement part holding jig 26D other than the hard section 28.

The core 26C having a trapezoidal sectional shape is arranged in the closed space having the trapezoidal sectional shape which is formed between the reinforcement part 14B and the main structure 12 in FRP structure 10. For example, the core 26C is made of a material with flexibility. Also, the hard section 28 having flexibility may be arranged in a portion of the upper surface of the core 26C which portion contacts the main structure 12. The hard section 28 has a hardness which is higher than a portion of the core 26C other than the hard section 28. By using a material having flexibility for the core 26C, the fitness of the core 26C and the reinforcement part 14B can be improved regardless of the size tolerance of the reinforcement part 14B. Also, a gap between the core 26C and the reinforcement part 14B is made smaller, so as to improve the positioning precision. Also, with the flexibility of the core 26C, the die release of the core 26C can be made easy from the reinforcement part 14B. Also, the core 26C can be made as a split type structure.

Also, because the hard section 28 is arranged in the portion, which contacts the main structure 12, of the upper surface of the core 26C with the flexibility, the sagging and deformation of the main structure 12 in the shaping can be reduced and the flatness and straightness can be improved.

Various types of rubber such as foaming rubber can be used as a material of the reinforcement part holding jig 26D and the core 26C. It is desirable to use silicon-based rubber material, in consideration of a chemical resistance.

Next, referring to FIG. 4, a method of shaping the FRP structure 10 having a closed space will be described. When shaping FRP structure 10, the reinforcement part holding jig 26D is arranged in a predetermined position of the main structure holding jig 22. The extending striated section with the trapezoidal sectional shape of the reinforcement part 14B is inserted into the ditch of the reinforcement part holding jig 26D such that eave extending sections on both sides of the upper part of the reinforcement part 14B (the base section of the reinforcement part 14B) hit to the two pieces of hard section 28 of the upper surface of the reinforcement part holding jig 26D.

Next, the convex striated section of the core 26C having the trapezoidal sectional shape is inserted into the ditch of the reinforcement part 14B. Next, the un-cured fiber reinforcing base material (the main structure 12) is arranged to cover the main structure holding jig 22 and the upper surface of the hard section 28 of the core 26C. The die release material and resin diffusion media are arranged in the outer periphery of the un-cured fiber reinforcing base material (the main structure 12), and the main structure 12, the reinforcement part 14B, the main structure holding jig 22 and the reinforcement part holding jig 26D is covered with the suction bag (the bagging film). The inside space of the suction bag is evacuated so as to apply a pushing pressure due to the atmosphere pressure to the main structure 12 and the joining section 16. At the same time, a matrix resin is injected and impregnated into the fiber reinforcing base material in which any resin is not impregnated.

When a matrix resin of the thermal curing type is used, the evacuation is carried out and the matrix resin is injected, and then the heating is carried out to cure the matrix resin. After the matrix resin is cured to join the main structure 12 and the reinforcement part 14B, the suction bag is removed. After that, the FRP structure 10 is separated from the main structure holding jig 22 and the reinforcement part holding jig 26D of the FRP shaping jig and the FRP structure 10 is taken out from the reinforcement part holding jig 26D and the main structure holding jig 22.

Next, the core 26C is pulled out of the closed space of FRP structure 10. In this way, the FRP structure 10 is obtained.

Note that another method of shaping the FRP structure 10 having a closed space as shown in FIG. 4 may be used. In the method, a bagging method can be used in which the outer periphery of the core 26C is covered by using a core bag to maintain a peripheral and inside space of the core 26C to an atmospheric pressure, a space between the core bag and a suction bag that covers the main structure 12, the main structure holding jig 22, and so on is evacuated to apply a pushing pressure to the joining section 16 between the reinforcement part 14B and the main structure 12. In this case, because the core 26C exists under the atmospheric pressure so that the deformation thereof is little, it is possible to shape the FRP structure 10 in a higher precision.

Also, if a material that shrinks through heating (hard polystyrene form, hard urethane form and so on) is used as the material of the core 26C, the die release after the heating can be facilitated. In this case, a material having a characteristic in which the material shrink at a temperature equal to or lower than the curing temperature of the matrix resin or the adhesive material (hard polystyrene form, hard urethane form and so on) can be used as the material of the core 26C. In this case, for example, it is desirable that the material has the characteristic to shrink at a temperature in a temperature range from 50 °C to the curing temperature, and it is more desirable that the material has the characteristic to shrink at a temperature in a temperature range between the curing temperature and a temperature that the fluidity of the adhesive material or the matrix resin is lost. Also, brazing filler metal that melts by heating can be used. In this case, too, it is desirable that the material has the characteristic to shrink at a temperature in a temperature range from 50 °C to the curing temperature, and it is more desirable that the material has the characteristic of melting at a temperature in a temperature range between the curing temperature and a temperature that the fluidity of the adhesive material or the matrix resin is lost.

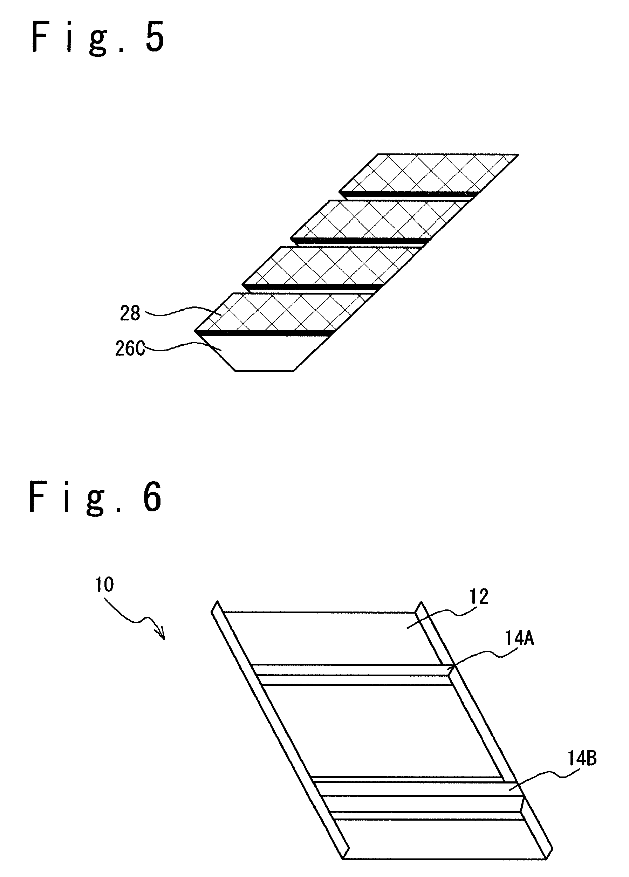

Next, another embodiment of the core 26C will be described with reference to FIG. 5. FIG. 5 is a perspective view showing the configuration of the core 26C of a split type. By connecting a plurality of parts obtained by dividing the core 26C in a multi-joint as shown in FIG. 5, the die release can be facilitated. Especially, it is possible to deal with various closed spaces by using the material having flexibility for the core 26C. Also, the core 26C can be made to have a split type structure.

When a fiber reinforcing base material is used as the configuration of the fiber components of the main structure 12 or the reinforcement part 14A or 14B, the reinforcing fiber striated string can be used in which a continuous reinforcement fiber striated string is aligned to be parallel. Also, 1-directional base material, 2-directional base material, and multidirectional base material of the reinforcement fiber striated string can be used according to need. For example, as another organization form of the fiber reinforcing base material, weaving organization (woven cloth), knitting organization (vertical knitting, horizontal knotting), non-weaving organization or a combination of them can be used.

Also, as the reinforcing fiber of the fiber component, a carbon fiber, a glass fiber, an aramid fiber, a polyparaphenylene benzobisoxazole fiber, a phenol fiber, a polyethylene fiber, an organic fiber such as the polyvinyl alcohol fiber, a metal fiber, or a ceramic fiber, and combinations of them can be used.

Also, as the matrix resin, a thermoplastic resin or a thermosetting resin can be used. It is desirable to use a thermosetting resin in a current situation from the viewpoint of the shape-ability and the dynamics characteristic. As the thermosetting resin, for example, resins of epoxy, phenol, vinyl ester, unsaturation polyester, cyanate ester, bismaleimide, benzo-oxazine, acrylic and so on can be used. Moreover, the resins added with elastomer, rubber, curing material, hardening accelerator, catalyst and so on can be used. It is desirable to arrange a release material and resin diffusion media on the side of the fiber component in the interior of the suction bag.

In the above-described embodiment, the embodiment has been described in which an FRP prepreg member is used for the reinforcement part 14A or 14B, and is joined to an un-cured fiber reinforcing base material (main structure 12). However, the FRP prepreg member may be used for the main structure 12. In this case, the adhesive material such as an adhesive film is arranged in the joining portion 16 of the reinforcement part 14A or 14B and the main structure 12. After the reinforcement part 14A or 14B is positioned to the main structure 12 and pushed, the adhesive material is cured. Also, the un-cured fiber reinforcing base material can be used as the reinforcement part 14A or 14B.

Next, shape examples of the FRP structure 10 that can be shaped by the method of shaping the FRP structure and the FRP shaping jig according to the above embodiments will be described with reference to FIG. 6 and FIG. 7.

The FRP structure 10 shown in FIG. 6 is a composite material in which the reinforcement part 14A having the T-shaped sectional shape and the reinforcement part 14B having a trapezoidal sectional shape are positioned and joined to the main structure 12 for integration, as shown in FIG. 7. It is possible to shape the FRP structure with a complicated shape in a low cost without using a complicated positioning jig, by using the FRP shaping jig and the method of shaping the FRP structure according to the embodiment.

In the above, the FRP shaping jig and the method of shaping the FRP structure have been described with reference to the embodiments. The FRP shaping jig and the method of shaping the FRP structure of the present invention are not limited to the above embodiments. Various modifications can be carried out to the above embodiments. A technical matter of one embodiment and another technical matter of another embodiment may be combined.

Also, the FRP structure which is manufactured by using the FRP shaping jig and the method of shaping the FRP structure is used for various fields such as a vehicle, a ship, an aircraft or an architecture member. The FRP shaping jig and the method of shaping the FRP structure are suitable for a case where two or more fiber components are integrated to one body to shape a final complicated shape with a closed space. Also, the FRP shaping jig and the method of shaping the FRP structure can be applied to a case of co-cure, co-bond and secondary adhesion, and can be used for the shaping of the FRP structures such as an RFI (resin film infusion shaping method), an RTM (resin transfer shaping method), a VaRTM (vacuum impregnation method) and so on.

The present application claims a priority based on Japanese Patent Application JP_2014-16998 that was filed on January 31, 2014. The content thereof is incorporated herein by reference.

## Claims

1. An FRP shaping jig used when a main structure and a reinforcement part are joined to shape an FRP structure, comprising:
a main structure holding jig; and
a reinforcement part holding jig having flexibility,
wherein the main structure holding jig positions and holds a main structure formed from a fiber component, and
wherein the reinforcement part holding jig is positioned to the main structure holding jig and positions and holds a reinforcement part formed from a fiber component, while pushing the reinforcement part.

2. The FRP shaping jig according to claim 1, wherein the reinforcement part holding jig positions and holds the reinforcement part while supporting a portion of the reinforcement part.

3. The FRP shaping jig according to claim 1 or 2, wherein the reinforcement part holding jig has a hollow structure and has flexibility.

4. The FRP shaping jig according to any of claims 1 to 3, wherein the reinforcement part holding jig has a hard section with flexibility at a portion, by which the reinforcement part is pushed, of a surface of the reinforcement part holding jig.

5. The FRP shaping jig according to any of claims 1 to 4, further comprising:
a shaping core to be arranged in a closed space that is formed between the reinforcement part and the main structure in the FRP structure.

6. The FRP shaping jig according to claim 5, wherein the shaping core has a hard section with flexibility at a portion, by which the main structure is pushed, of a surface of the shaping core.

7. The FRP shaping jig according to claim 4 or 6, wherein the hard section is configured from an FRP thin plate or a metal foil.

8. The FRP shaping jig according to any of claims 4, 6 and 7, wherein the hard section has a heat resistance at a curing temperature or above of a matrix resin or an adhesive agent, and is configured from a plate member having a thickness of 0.1 mm or above and 5 mm or below.

9. The FRP shaping jig according to any of claims 1 to 8, wherein the main structure holding jig or the shaping core is of a split type structure.

10. A method of shaping an FRP structure by using an FRP shaping jig which comprises a main structure holding jig and a reinforcement part holding jig with flexibility, wherein the main structure holding jig positions and holds a main structure configured from a fiber component, and the reinforcement part holding jig is positioned to the main structure holding jig and configured to position and hold a reinforcement part configured from a fiber component while pushing the reinforcement part,
wherein the method is a method of shaping the FRP structure by joining the main structure and the reinforcement part,
wherein the method comprises:
arranging the reinforcement part holding jig in the main structure holding jig;
using the reinforcement part holding jig to support the reinforcement part;
arranging the main structure on the main structure holding jig and the reinforcement part holding jig;
joining the main structure and the reinforcement part to shape the FRP structure; and
taking out the FRP structure from the main structure holding jig and the reinforcement part holding jig.

11. The method of shaping the FRP structure according to claim 10, further comprising:
arranging a shaping core in a closed space that is formed between the reinforcement part and the main structure in the FRP structure.

12. The method of shaping the FRP structure according to claim 10 or 11, further comprising:
arranging an adhesive material in a joining section of the main structure and the reinforcement part.

13. The method of shaping the FRP structure according to claim 10 or 11, wherein the reinforcement part is a prepreg member,
wherein the main structure is a fiber reinforcing base material, and
wherein the method further comprises:
injecting a matrix resin into a joining section of the main structure and the reinforcement part.

14. The method of shaping the FRP structure according to claim 12 or 13, further comprising:
covering the main structure and the reinforcement part with a suction bag;
pushing and joining the main structure and the reinforcement part by evacuating an inside of the suction bag; and
removing the suction bag.

15. The method of shaping the FRP structure according to claim 14, further comprising:
curing an adhesive material or a matrix resin through heating after the evacuating the inside of the suction bag.
